# EUROPEAN PATENT APPLICATION

(11) **EP 3 772 478 A1**
(43) Date of publication of application: **10.02.2021**
(21) Application number: 19290064.5
(22) Date of filing: 07.08.2019
(51) Int. Cl.: B65G 21/06, B65G 21/22

(54) **RAILLOCKER, CONVEYOR SYSTEM AND METHOD**

(71) Applicant: Interroll Holding AG, 6592 Sant' Antonino (CH)
(72) Inventor: Loizeau, Antoine, 85110 Saint Germain de Princay (FR)
(74) Representative: Müller-Boré & Partner Patentanwälte PartG mbB

(57) **Abstract**

A raillocker (1) for assembling two successive rails (110, 120) of a conveyor system (100) in an operating position, in which the two rails (110, 120) are aligned in a conveying direction (C) of the conveyor system (100), comprises a first engaging body (10) for engaging in a hollow end (111) of a first rail (110) of the two rails (110, 120) in a form-fit. It further comprises a second engaging body (20) for engaging in a hollow end (121) of a second rail (120) of the two rails (110, 120) in a form-fit. A lift-off prevention (30) in the form of a lateral protrusion (31) is configured to engage in a recess (112,122) of both the first rail (110) and the second rail (120), respectively, in the operating position in which the lift-off prevention (30) prevents a lifting of both the first rail (110) and the second rail (120).

## Description

The invention relates to a raillocker, a conveyor system, and a method of assembling a two successive rails of a conveyor system.

Conveyors comprising a plurality of rollers are commonly used for transporting loads. The rollers determine a track on which the loads, such as pallets, are transported towards a discharge end of the conveyor, where the loads are unloaded by, e.g., a forklift operator. Generally, the loads may be conveyed in opposite directions along the track.

Some conveyors and/or conveyor systems comprise trolleys and/or robotic vehicles driving on rails along tracks of the conveyor. The rails may, e.g., be arranged below the rollers of the track. The rails are assembled in a statically fixed manner, e.g., at a frame of the conveyor track for providing sure footage for the trolley and/or robotic vehicle of the conveyor system. Thus, the assembling of the rails is usually cumbersome to assure its fixed mounting.

The problem relates to providing an enabling and/or simplified assembling of the rails of a conveyor system.

This problem is solved by the subject-matter of the independent claims. Preferred embodiments are the subject-matter of the dependent claims.

An aspect relates to a raillocker for assembling two successive rails of a conveyor system in an operating position, in which the two rails are aligned in a conveying direction of the conveyor system. A raillocker comprises a first engaging body for engaging in a hollow end of a first rail of the two rails in a form-fit. The raillocker further comprises a second engaging body for engaging in a hollow end of a second rail of the two rails in a form-fit. The raillocker further comprises a lift-off prevention in the form of a lateral protrusion configured to engage in a recess of both the first rail and the second rail, respectively, in the operating position in which the lift-off prevention prevents a lifting of both the first rail and the second rail.

The raillocker is provided as a separate component of the conveyor system that enables assembling, aligning, and/or mounting of the two successive rails of the conveyor system. The raillocker is arranged at a connection of said two successive rails. In the operating position, the raillocker connects the two successive rails, wherein the raillocker is partially arranged within the (first) hollow end of the first rail and partially arranged within the (second) hollow end of the second rail. The two hollow ends of the first rail and the second rail are arranged so that they face each other with their hollow end and may be engaged by the same raillocker.

The first engaging body and the second engaging body of the raillocker may be a part of an elongated main body of the raillocker. The first engaging body is configured and/or dimensioned for insertion into the (first) hollow end of the first rail so that it is engaged within said hollow end in a form-fit, e.g. by positive-locking. For providing the form-fit, the outer dimensions of the first engaging body may substantially correspond to the inner dimensions of the (first) hollow end of the first rail.

Similarly, the second engaging body is configured to be inserted into the (second) hollow end of the second rail in the form-fit, e.g. in a positive-locking connection. Therefore, also the outer dimensions of the second engaging body may substantially correspond to the inner dimensions of the (second) hollow end of the second rail.

Preferably, the first engaging body abuts the (first) hollow end of the first rail in the operating position at at least two or three sides, e.g. its two lateral sides and its upper side. Similarly, also the second engaging body may abut the inner surfaces of the (second) hollow end of the second rail at at least two or three sides, e.g. at the two lateral sides and the upper side.

To establish the form-fit, the respective engaging body of the raillocker is inserted into the respective hollow end of the rail in a direction that may be aligned substantially parallel to the conveying direction. The conveying direction usually points in two opposite directions along the conveyor track. Thus, also the engaging direction of the first engaging body in the first hollow end may be directed in opposite direction than the engaging direction of the second engaging body in the second hollow end.

In the operating position, the form-fit of the engaging bodies in the respective hollow end may be directed in at least the two lateral directions. In particular, the form-fit of the engaging bodies in the respective hollow end may be directed in all directions substantially perpendicular to the conveying direction.

As used herein, the conveying direction of the conveyor system corresponds to the direction along which loads and/or goods may be transported along the conveyor system. The conveying direction substantially corresponds to the alignment direction of the conveyor track. The two rails may be arranged and/or aligned by the raillocker in a direction substantially parallel to the conveying direction. Usually, the conveying direction is aligned in a substantially horizontal direction. Occasionally, the conveying direction may include an inclination towards the horizontal direction, e.g. to provide a gravity component that enables the transportation of the loads. This inclination may, e.g., be from about 0° to about 5° towards the horizontal plane.

The term 'lateral', e.g. in 'lateral direction', relates to the two directions that are aligned substantially perpendicular to the conveying direction and substantially horizontal.

The terms upper, lower, below, above, bottom, etc. refer to the respective direction in the reference system of the Earth. All directions are defined for the situation when the subject-matter is arranged in the operating position.

The first engaging body and/or the second engaging body may, e.g., comprise substantially the same outer dimensions. Thus, they are configured to be plucked into rails comprising substantially the same inner dimensions. This may enable a smooth transition from the first rail to the second rail and vice versa.

The form-fit enables a reliable and/or secure positioning of the rails. In the operating position, the raillocker is engaging the first rail and the second rail in a statically fixed manner.

The first engaging body and/or the second engaging body may, e.g., be configured to not only establish a form-fit in the operating position, but also a force-fit, e.g., by being clamped inside the respective hollow end of the rail. The clamping force may, e.g., be provided by the opposite lateral inner sides of the respective hollow end. Additionally or alternatively, the clamping force may, e.g., be provided by the upper inner side of the respective hollow end and a support of the raillocker, e.g. by the upper side of a lateral intermediate beam on which the raillocker is supported. The force-fit may be configured to be sufficiently strong that it prevents a removal of the respective engaging body out of the respective hollow end of the rail during the regular operation of the conveyor system.

The raillocker further comprises the lift-off prevention in the form of at least one lateral protrusion. The protrusion may be arranged at a lateral side of the raillocker that may be part of both the first engaging body and of the second engaging body. Thus, the lateral protrusion may be inserted into a recess of both the first rail and the second rail.

The lateral protrusion may be provided as a single lateral protrusion and/or as a plurality of lateral protrusions. In an embodiment, the raillocker may comprise a single lateral protrusion on one of its lateral sides. In another embodiment, the raillocker may comprise a single lateral protrusion on each of its two lateral sides. Alternatively, the raillocker may comprise two or more lateral protrusions on the same lateral side.

Therein, a first of these protrusions enters the (first) recess of the first rail in the operating position, and a second of the plurality of lateral protrusions may engage in the (second) recess of the second rail. In an embodiment, the raillocker may comprise two or more lateral protrusions on each of its lateral sides.

Depending on the design of the lift-off prevention, the hollow ends may, correspondingly, comprise a single recess or a plurality of recesses, respectively. Therein, each hollow end may comprise one recess for each of the protrusions. In an embodiment, each hollow end comprises a single recess on each of its two lateral sides and/or walls. Each recess may extend from the very end of the respective rail along the conveying direction and along a lateral side and/or wall of the respective rail.

In the operating position, at least a section (e.g. a projection below the recess) of the first rail is arranged below the lateral protrusion so that a form-fit is established in a substantially vertically upwards aligned direction. Thus, the hollow end of the first rail may not be lifted without lifting the raillocker. The same applies to the second rail.

In the operating position, the two rails are connected via the raillocker to each other. The interaction and/or synergy of the form-fits and the lift-off prevention enables a secure and/or reliable mounting, assembling, and/or aligning of the two rails in the operating position. Even more, the raillocker may be configured to render further mounting devices at the connection of the two rails redundant. For example, the assembling and/or mounting of the two successive rails at their connection may be achieved without the need of further mounting devices like screws, bolts, clamps, etc. Indeed, the raillocker may be provided as a single connecting and/or mounting device for assembling the two rails at their connection. This enables a simple assembling of the rails and/or the conveyor system. In particular, the assembling by the raillocker may be achieved without the need of further tools, with the exception of maybe a hammer to hammer the engaging portions into the respective rails. Thus, the raillocker may enable that the conveyor system is assembled at the client's side by the client itself without the need of a specially trained work force.

According to an embodiment, the raillocker comprises an elongated main body comprising both the first engaging body and the second engaging body. Therein, the lateral protrusion of the lift-off prevention protrudes from the main body in a lateral, horizontal direction perpendicular to the conveying direction. Herein, the main body is elongated in the conveying direction. This means that its extension along the conveying direction is larger than its extensions in other directions. Also, the elongated main body comprises outer sides arranged substantially parallel to the conveying direction, e.g. lateral sides and/or an upper side and/or a lower side. Thus, the main body may be arranged as a continuation of the first rail in conveying direction and/or of the second rail in conveying direction. Providing the two engaging portions by the same elongated main body enables a simple and/or straight alignment of the two rails.

According to an embodiment, the raillocker comprises an elongated main body comprising the first engaging body and the second engaging body, the lift-off prevention comprises two lateral protrusions protruding from the main body in opposite directions, and each of the two lateral protrusions is configured to engage in a recess of both the first rail and the second rail, respectively, in the operating position. Herein, each hollow end of the first rail and the second rail comprises at least two recesses at opposite lateral sides of the respective rail. These two opposite recesses enable the engaging and inserting of the two lateral protrusions of the lift-off prevention. Providing at least one protrusion at each of the lateral sides improves the effect of the lift-off prevention, even in the case that in that one protrusion breaks off the raillocker. Even more, the substantially symmetric configuration of the lift-off prevention may prevent and/or reduce any twisting of any of the rails.

According to an embodiment, the raillocker further comprises a mounting portion for mounting the raillocker to a lateral intermediate beam of the conveyor system. The lateral intermediate beam of the conveyer system may be arranged so that its longest extension is aligned in a substantially horizontal direction that is substantially perpendicular to the conveying direction. In other words, the lateral intermediate beam may be substantially laterally aligned. The lateral intermediate beam may be configured to support the first and/or second rail at their connection and/or the raillocker in a predetermined height of the rails. The mounting portion of the raillocker enables a secure mounting of the raillocker to the lateral intermediate beam. Thus, the rails may be connected and/or mounted to the lateral intermediate beam by the raillocker. The mounting portion may comprise a protrusion configured to engage in a opening of the lateral intermediate beam.

According to a further development of this embodiment, the mounting portion is provided as a hook and/or is arranged at a bottom side of the raillocker. The hook may engage in an opening and/or recess of the lateral intermediate beam and may provide a lift-off prevention feature of the raillocker that prevents a lifting of the raillocker from the lateral intermediate beam. This lift-off prevention feature is transferred to the two rails by the lift-off prevention of the raillocker itself. To establish a functional lift-off prevention feature, the mounting portion may be arranged at the bottom side of the raillocker, the side on with which the raillocker rests up on the lateral intermediate beam in the operating position.

According to an embodiment, the raillocker is provided as a. For example, the raillocker may be provided from plastic comprising a sufficient stability and/or stiffness to ensure the secure and reliable connection of the two rails monoblock, e.g. by injection moulding or as 3D-print. Furthermore, providing the raillocker as a monoblock renders an assembling of the raillocker itself redundant, because a monoblock is already assembled. In particular, the monoblock may comprise the first engaging body, the second engaging body, and the lift-off prevention. Furthermore, the monoblock may comprise the elongated main body and/or the mounting portion, depending on the respective embodiment. A monoblock may furthermore comprise features preventing its twisting and/or improving its stability, e.g. in the form of ribs between sides/walls of the raillocker.

An aspect relates to a conveyor system comprising at least one raillocker according to the previous aspect. Therein, the raillocker is connecting two rails of the conveyor system in an operating position in which the two rails are aligned in a conveying direction of the conveyor system. The first engaging body of the raillocker engages in a (first) hollow end of the first rail of the two rails in a form-fit. The second engaging body of the raillocker engages in a (second) hollow end of a second rail of the two rails in a form-fit. A lift-off prevention in the form of the lateral protrusion engages in a recess of both the first rail and the second rail, respectively, in the operating position, in which the lift-off prevention prevents a lifting of both the first rail and the second rail.

Because the connection is established by a raillocker according to the previous aspect, all disclosure described in connection with the raillocker itself also applies for the conveyor system and vice versa.

According to an embodiment, the conveyor system further comprises a lateral intermediate beam arranged at a position at which the first rail is connected to the second rail and aligned in a horizontal direction perpendicular to the conveying direction. Therein, both the first rail and the second rail are supported by the lateral intermediate beam. Furthermore, also the raillocker may be supported by the lateral intermediate beam. Thus, the lateral intermediate beam of the conveyor system provides a stable support from below and, furthermore, may prevent the rails and/or the raillocker from moving out of their operating position in a substantially vertical direction downwards. The conveyor system may comprise a plurality of lateral intermediate beams at sections at which rails are connected and/or assembled to successive rails.

According to a further development, the lateral intermediate beam comprises at least one opening in that protrusions of both the first rail and the second rail engaged. Said protrusions may be provided at the respective hollow ends and may be inserted into the at least one opening of the lateral intermediate beam in a direction substantially parallel to the conveying direction and/or in a direction comprising a vertical component directed downwards. The protrusions may protrude from the respective rail in a direction substantially parallel to the conveying direction. Thus, a form-fit may be provided that prevents a lateral displacement of the rails and/or the raillocker in a direction substantially perpendicular to the conveying direction. Thus, the rails, or rather their respective hollow ends, are secured in at least one lateral direction to the lateral intermediate beam in their operating position.

In an embodiment, the raillocker comprises a mounting portion engaging a recess of the lateral intermediate beam. Said mounting portion may, e.g. be provided as a hook. The mounting portion in the recess of the lateral intermediate beam may prevent a lifting of the raillocker from the lateral intermediate beam. Furthermore, the mounting portion may also abut the recess of the lateral intermediate beam in a lateral direction, so that this connection also provides a lateral form-fit that enables preventing a lateral displacement of the raillocker.

According to an embodiment, the hollow end of the first rail abuts the lateral intermediate beam in conveying direction facing the second rail and the hollow end of the second rail abuts the lateral intermediate beam in conveying direction facing the first rail. Herein, the hollow ends to the two rails are not only supported from below by the lateral intermediate beam, but they also abut the lateral intermediate beam in the respective conveying direction. Thus, the lateral intermediate beam may provide a support and/or an end stop in the respective conveying direction to secure and/or establish the operating position of the respective rail.

According to an embodiment, the conveyor system further comprises a lateral end beam aligned in a horizontal direction perpendicular to the conveying direction and arranged at an end of the conveyor system in conveying direction, wherein the first rail is fixed to the lateral end beam at an end opposite of its hollow end facing the second rail. The lateral end beam may be arranged at an end of a track of the conveyor system. At this end respective rail ends, here the first rail. Thus, the connection of this opposite end of the first rail may not be established by the raillocker, because at the end, no further rail is arranged. Thus, the first rail is connected to the lateral end beam by a different mounting method than at the intermediate sections, where two successive rails are mounted to each other and assembled by the raillocker. In particular, the opposite end of the first rail may be fixedly mounted to the lateral end beam, e.g. by screws and/or further fixing means to enable a secure assembling and/or mounting of this opposite end of the first rail. The lateral end beam may also provide a stop in conveying direction for the first rail in the direction facing away from the second rail. Since the opposite rail may be fixed to the lateral intermediate beam by fixing means like screws, the opposite end of the first rail may be mounted to the lateral end beam in a statically completely fixed manner.

According to an embodiment, the raillocker, the first rail, and the second rail is provided as a left raillocker, a left first rail, and a left second rail respectively. The conveyor system further comprises a right raillocker according to the previous aspect connecting two right rails of the conveyor system in an operating position in which the two right rails are aligned in the conveying direction of the conveyor system parallel to and spaced from the two left rails. Therein, the first engaging body of the right raillocker engages in a hollow end of a right first rail of the two right rails in a form-fit. The second engaging body of the right raillocker engages in a hollow end of a right second rail of the two right rails in a form-fit. The lift-off prevention in the form of the lateral protrusion engages a recess of both the first right rail and the right second rail, respectively, in the operating position in which the lift-off prevention prevents a lifting of both the right first rail and the right second rail. In other words, the two right rails are mounted exactly as the two left rails by their respective raillocker. In the operating position, the two right rails are arranged substantially parallel to the two left rails. Together, the two left rails and the two right rails provide a double rail track for a car, trolley, and/or vehicle like a moving robot of the conveyor system. Both the right rails and the left rails may be connected and/or assembled by an identical raillocker, namely the right raillocker and the left raillocker which may be designed similarly and/or identically.

According to an embodiment, the conveyor system further comprises a robot moving on the at least two rails of the conveyor system. The robot may be provided as a robotic vehicle and/or configured to support the conveying of loads and/or pallets along the conveyor system. Therein, the loads may be carried by the robot.

Alternatively, the robot may drive rollers of the conveyor system in particular from below so that said rollers convey the load and/or pallet along the conveyor system.

A completely assembled conveyor system with all raillockers in operating position may comprise two rails designed to guide a robot along the rails. The robot may be guided by at least one lateral wall of an (in a sectional view) omega-shaped rail and an upper side of an omega-shaped rail supporting a drive (e.g. a drive roller) of the robot as a runway. A conveyor system may comprise a robot moving on and along the at least two rails of the conveyor system. The robot may comprise a side roller contacting at least one lateral wall of the rail. The robot may drive on drive wheels supported by the upper sides of the rails.

An aspect relates to a method of assembling two successive rails of a conveyor system in an operating position so that the two rails are aligned in a conveying direction of the conveyor system, comprising the steps:
- providing a raillocker;
- engaging a first engaging body of the raillocker in a hollow end of a first rail in a form-fit;
- engaging a lift-off prevention of the raillocker in the form of a lateral protrusion in a recess of the first rail;
- engaging a second engaging body of the raillocker in a hollow end of a second rail of the two rails in a form-fit; and
- engaging the lift-off prevention of the raillocker in a recess of the second rail.

The method steps are not necessarily carried out in this order. Furthermore, the method may be carried with a raillocker and/or a conveyor system as described in the previous aspects. Thus, the disclosure relevant for the previous aspects also applies to the method and vice versa.

When assembling the two successive rails, a frame of the conveyor track may first be assembled by two feet of the conveyor system carrying a lateral end beam between them. An opposite end of at least one first rail may be fixedly mounted to this lateral end beam. Two more feet may be provided to carry and/or support a first lateral intermediate beam between them. The lateral intermediate beam is arranged spaced apart from the lateral end beam by a distance that may substantially correspond to the length of the first rail. Also the hollow end of the first rail is spaced apart from the opposite end by the length of the rail.

The hollow end of the first rail may be put on said lateral intermediate beam. This may be done in a way so that the main opening of its hollow end faces in conveying direction. Afterwards, the first engaging body of the raillocker may be inserted into the hollow end of the first raillocker. Thereby, a mounting portion of the raillocker may be inserted into a (e.g., upper) recess of the lateral intermediate beam. The mounting portion of the raillocker may be engaged like a hook to the lateral intermediate beam. The raillocker is inserted into the hollow end of the first rail in a form-fit and/or in a force-fit. Thereby, the lift-off prevention of the raillocker is also partially inserted into the recess of the first rail.

Afterwards, both the first rail and the raillocker are already arranged in their operating position, together with, e.g., the lateral intermediate beam.

Then, the hollow end of the second rail is slipped over the second engaging portion of the raillocker in a form-fit and/or a force-fit. Thereby, the lift-off prevention of the raillocker is also inserted in the recess of the hollow end of the second rail. Thus, the two successive rails are assembled and mounted to each other.

At the opposite end of the second rail, a further lateral intermediate beam may be arranged to connect the second rail to a third rail and so on. Alternatively, at this opposite end of the second rail, another lateral end beam may be arranged so that the opposite end of the second rail is fixed to said other lateral end beam.

The invention enables a simplified and/or fast assembling of the rails of the conveyor system.

The numbers and/or angles given in the claims and the description are not limited to the exact numbers and/or angles, but may include measurement inaccuracies within limits that still enable solving the underlying problem.

The invention is further illustrated in reference to embodiments shown in the figures. Embodiments of the invention are described with reference to the figures. Features of the embodiments shown in the figures may be combined with alternative embodiments. Identical reference numbers may identify identical or similar features of the embodiments. The embodiments as shown by:
- Fig. 1: a perspective view of an assembled conveyor system;
- Figs.2A-2J: a perspective view of 10 steps in which rails of a conveyor system are assembled;
- Figs.3A-3E: a perspective view and a side view, respectively, of 5 steps in which two rails of a conveyor system are assembled;
- Fig. 4A: a perspective view of a raillocker;
- Fig. 4B: a side view of the raillocker;
- Fig. 5A: a perspective view of a first rail;
- Fig. 5B: a front view of the first rail;
- Fig. 5C: a perspective view of a hollow end of the first rail;
- Fig. 6: a perspective view of a foot of a conveyor system;
- Fig. 7: a perspective view of a lateral end beam of a conveyor system;
- Fig. 8A: a perspective view of a lateral intermediate beam of a conveyor system;
- Fig. 8B: a front view of the lateral intermediate beam; and
- Fig. 9: a side view of a robot driving along the assembled rails of a conveyor system.

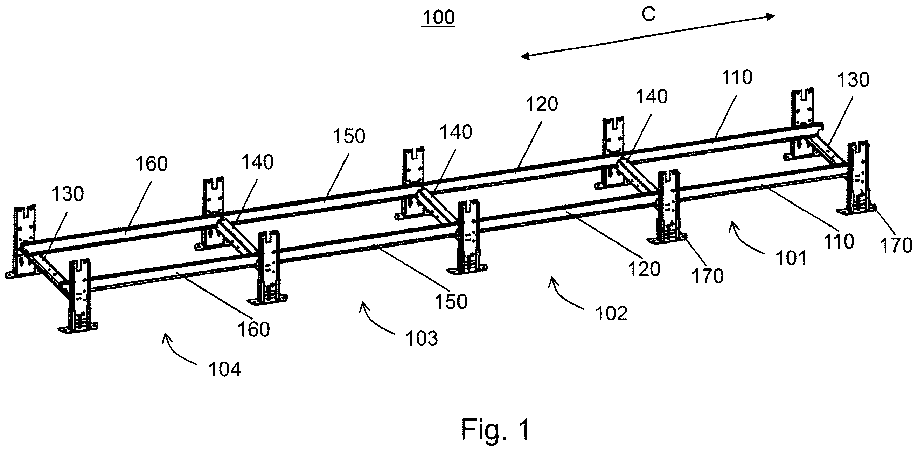

**Fig. 1** shows a perspective view of an assembled conveyor system 100. More precisely, the conveyor system 100 is at least partially assembled. In Fig. 1, the rails of the conveyor system 100 are already assembled, but not yet any rollers of the conveyor system 100. Said rollers may be assembled in a next step so that they are arranged above the already assembled rails. On the (not shown) rollers, loads and/or goods and/or pallets may be transported above the rails of the conveyor system 100.

The shown conveyor system 100 comprises a single conveyor track that is provided as a linear, straight track. The conveyor system 100 comprises a plurality of feet 170, only a part of which are identified in Fig. 1 by a reference sign. The feet 170 are arranged in pairs of feet 170 between which lateral beams 130, 140 are arranged.

The track of the conveyor system 100 is configured to transport loads in conveying direction C. The conveying direction C may extend in two opposite directions, in Fig. 1 to the left and to the right. Thus, loads like pallets may be conveyed along the conveyor system 100 along the track in at least one of the two opposite conveying directions C. For carrying the loads, the conveyor system 100 may further comprise rollers mounted in a frame (not shown in Fig. 1).

The conveyor system 100 is shown as an embodiment that comprises four sections, here (from right to left) the first section 101, the second section 102, the third section 103, and the fourth section 104. Each section 101, 102, 103, and 104 may be provided as a module of the conveyor system 100. An alternative conveyor system may comprise more or less of these sections and/or modules.

The first section 101 is arranged at a right end of the conveyor system 100. At this right end, a first pair of feet 170 is arranged between which a lateral end beam 130 is mounted. Each foot 170 of the conveyor system 100 may be fixed to the floor to provide a sure footing. The lateral end beam 130 extends in a substantially horizontal direction and substantially perpendicular to the conveying direction C.

The first section 101 extends from the lateral end beam 130 in conveying direction C towards another, second pair of feet 170 by which a (first from the right) lateral intermediate beam 140 is supported. A pair of first rails 110 is arranged along the first section 101 so that a first end of each first rail 110 is arranged on the lateral intermediate beam 140 and an opposite end of each first rail 110 is arranged on the lateral end beam 130. Each of the first rails 110 is aligned substantially parallel to the conveying direction C. The pair of first rails 110 may also be referred to as left first rail 110 and right first rail 110. The two first rails 110 are arranged parallel to each other.

The second section 102 of the conveyor system 100 is provided in a similar way: The second section 102 extends from the (first from the right) lateral intermediate beam 140, towards which the first rails 110 extend, towards another (second from the right) lateral intermediate beam 140 mounted between another (third from the right) pair of feet 170. In the second section 102, a pair of second rails 120 is arranged as extension of the first rails 110.

From this point, the third section 103 extends from the (second from the right) lateral intermediate beam 140 to another (third from the right) lateral intermediate beam 140 between another (fourth from the right) pair of feet 170. A pair of third rails 150 is arranged between said two lateral intermediate beams 140.

Finally, the fourth section 104 extends from this end of the third section 103 to an (here: left) end of the conveyor track 100, at which another (fifth from the right) pair of feet 170 supports a (left) lateral end beam 130. Along the fourth section 104, a pair of fourth rails 160 is arranged.

The length of each section 101, 102, 103, and 104 substantially corresponds to the length of the respective rails 110, 120, 150, and 160, respectively. Because all rails 110, 120, 150, and 160 of the shown conveyor system 100 comprise substantially the same length, also all sections 101, 102, 103, and 104 comprise substantially the same length. Indeed, in the shown conveyor system 100, all rails 110, 120, 150, and 160 are substantially identical and interchangeable.

Along the whole conveyor system 100, the rails 110, 120, 150, and 160 are aligned successively so that they provide two parallel, continuous rails along the conveying direction C. On these continuous rails, a vehicle and/or robot of the conveyor system 100 may drive along the track of the conveyor system 100.

Fig. 1 shows merely an embodiment of a conveyor system 100. In other embodiments, the conveyor system 100 may comprise more or less sections and/or rails. Even more, in other embodiments, some or all of the rails may be bent so that the track (and, thus, also the conveying direction C) of the conveyor system 100 may be aligned along a curve.

The conveyor system 100 may be configured to transport pallets along the conveying direction C. The movement of the pallets along the conveying direction C may be driven by a vehicle, trolley and/or robot driving along the rails 110, 120, 150, 160 in conveying direction C.

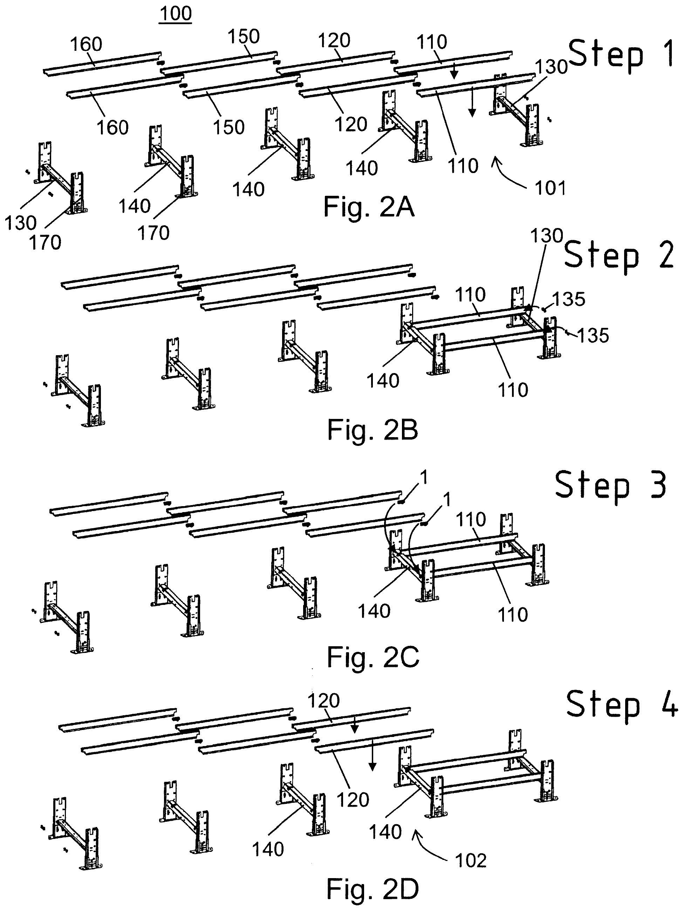

**Figs. 2A to 2J** show how the rails of the conveyor system 100 shown in Fig. 1 may be assembled in ten successive method steps. The exact number of steps necessary to assemble the rails of the conveyor system 100 may depend on the number of sections 101-104 and, thus, the total number of rails. In these figures, merely a few elements of the conveyor system 100 are identified by reference signs.

**Fig. 2A** shows a perspective view of the conveyor system 100 wherein only the pairs of feet 170, the lateral end beams 130, and the lateral intermediate beams 140 are yet assembled. The other elements of the conveyor system 100, in particular the rails 110, 120, 150, and 160, are not yet assembled but shown in an explosive view. After the complete assembly of a base structure of the conveyor system 100, namely the feet 170, the rails, the raillockers and/or the rollers, all the feet 170 may get fixed to the floor, e.g. by screws engaged in holes drilled in the floor to provide a sure footing and a stable support for the conveyor system 100.

As shown in Fig. 2A, in a step 1, the pair of first rails 110 is laid upon the (right) lateral end beam 130 and upon the closest (first from the right) lateral intermediate beam 140. Therein, a first hollow end of each first rail 110 is put upon said lateral intermediate beam 140 and an opposite end of each first rail 110 is put upon said lateral end beam 130.

**Fig. 2B** shows, in a step 2 of the method, how the first rail 110 are fixed to the (right) lateral end beam 130 by fixing elements 135, e.g. screws, for fixing the according end of the first rails 110 statically to the (right) lateral end beam 130. The first hollow ends of the two first rails 110 resting on the (first from the right) lateral intermediate beam 140 are not yet completely fixed to said lateral intermediate beam 40. They are merely laid up on said lateral intermediate beam 140. However, they may be partially inserted into respective openings and/or recesses within the lateral intermediate beam 140 to support the alignment of the pair of first rails 110 and/or to provide a lateral form-fit.

**Fig. 2C** shows a step 3 of the method, in which two raillockers 1 are fixed to the first ends of the first rails 110 resting on the (first from the right) lateral intermediate beam 140. Each of said two raillockers 1 may be fixed to both the respective first rail 110 and to the (first from the right) lateral intermediate beam 140 on which the first hollow ends of the first rails 110 rest.

**Fig. 2D** shows a step 4 in which the pair of second rails 120 is put in the second section 102, so that the ends of the second rails 120 rest upon a lateral intermediate beam 140, each (here: on the first and second from the right a lateral intermediate beam 140). As part of step 4, the second hollow ends of the second rails 120 facing the first rails 110 are imposed on the already assembled raillockers 1 protruding from the first rails 110. More details regarding this connection between the first rails 110 and the second rails 120 by the raillockers 1 are given below with reference to the following figures.

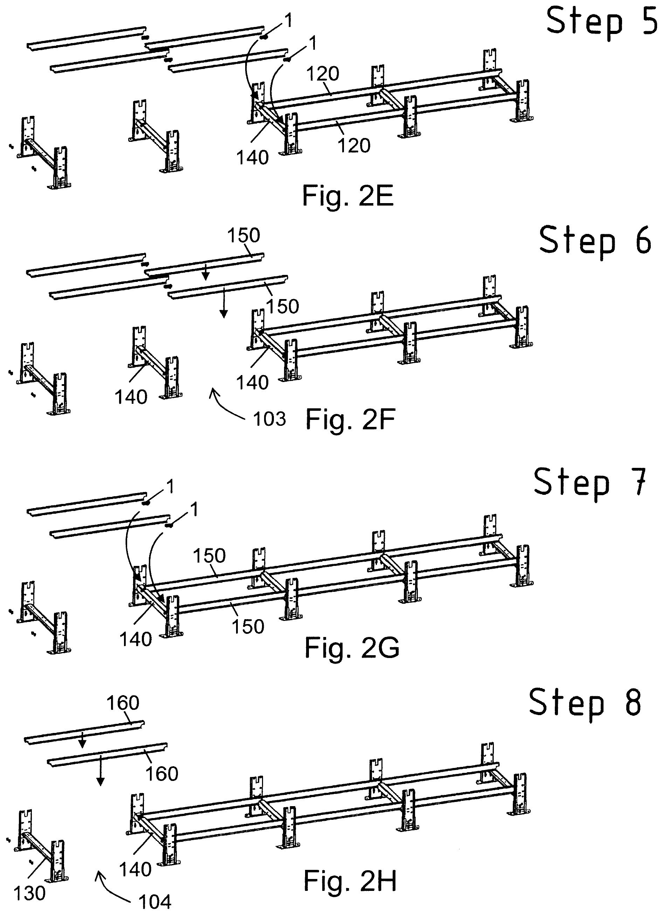

**Fig. 2E** shows how, in a step 5, another pair of raillockers 1 is fixed to the ends of the second rails 120 facing away from the first section 101. Therein, these raillockers 1 are fixed to the respective end of the second rails 120 and the (second from the right) lateral intermediate beam 140 by which these ends are supported.

**Fig. 2F** shows a step 6 of the method in which the pair of third rails 150 are put on the two lateral intermediate beams 140 defining the third section 103 of the conveyor system 100 (here: on the second and third from the right a lateral intermediate beam 140). Therein, the third rails 150 are arranged as an extension of the so far already installed first rails 110 and 120. The hollow ends of the third rails 150 facing the second rails 120 are imposed on the already assembled raillockers 1 protruding from the (left) ends of the second rails 120.

**Fig. 2G** shows a step 7 of the method in which two more raillockers 1 are mounted to the (left) ends of the third rails 150 and the (third from the right) lateral intermediate beam 140 they rest upon.

**Fig. 2H** shows step 8 of the method in which the pair of fourth rails 160 is put onto the fourth section 104 on the (third from the right) lateral intermediate beam 140 and the (left) end beam 130. Therein, the (right) hollow ends of the fourth rails 160 are imposed on the already assembled raillockers 1 protruding from the (left) ends of the third rails 150.

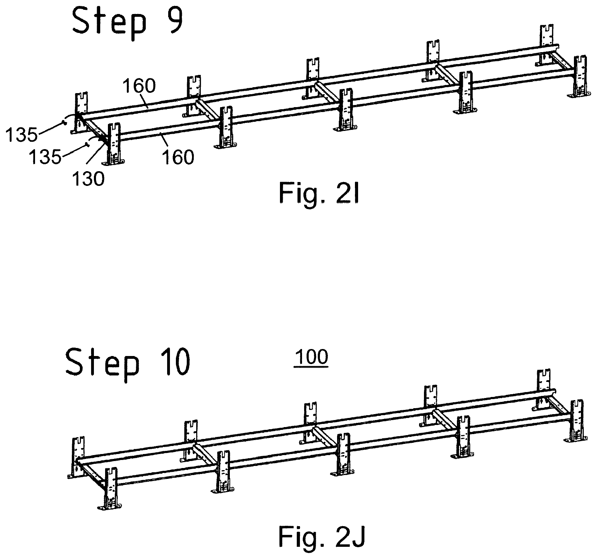

**Fig. 2I** shows a step 9 of the method in which the (left) ends of the fourth rails 160 are fixed to the (left) lateral end beam 130 by fixing elements 135, e.g. screws.

**Fig. 2J** shows a step 10 in which the conveyor system 100 is as assembled as shown in Fig. 1 above.

The steps of the assembly method may depend on the length of the conveyor system 100, in particular on how many sections 101 to 104 the conveyor system 100 comprises. Since an aspect of the invention relates to the connection established and/or supported by the raillocker 1, an embodiment of a conveyor system 100 comprises at least two sections 101, 102, 103, 104 of conveyor modules, i.e. the first section 101 and the second section 102 connected to each other at one of the lateral intermediate beams 140 by at least one raillocker 1.

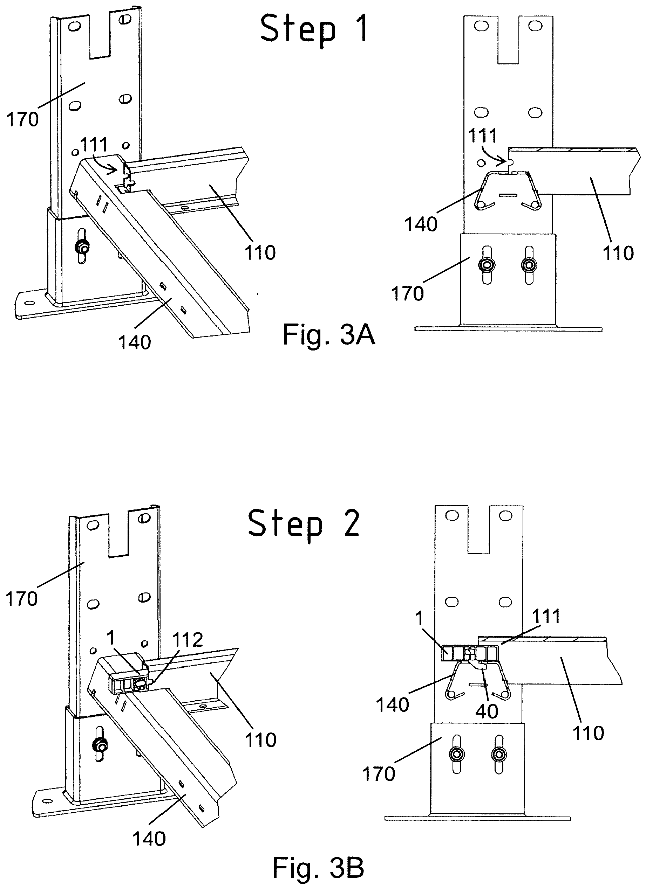

**Figs. 3A to 3E** show a perspective view and a side view, respectively, of five method steps in which two successive rails of the conveyor system 100 are assembled. On the left hand side of each figure, a perspective view of the situation is shown. On the right hand side of each figure, the same view is shown as a cross section from the lateral side.

**Fig. 3A** shows a foot 170 to which one end of a lateral intermediate beam 140 is mounted. Not shown is the other foot 170 of the pair of feet 170 to which the same lateral intermediate beam 140 is mounted at its other end.

A hollow end 111 of the first rail 110 rests upon one side of the lateral intermediate beam 140. Here, the first rail 110 is provided as a hollow profile that comprises, in particular, the hollow end 111. However, the first rail 110 may be designed completely hollow over its whole length.

The hollow end 111 of the first rail 110 is arranged on the lateral intermediate beam 140 so that it is supported from below. Furthermore, the hollow end 111 is also arranged on the lateral intermediate beam 140 so that it abuts said lateral intermediate beam 140 in conveying direction C towards the lateral intermediate beam 140. In other words, the lateral intermediate beam 140 is also arranged as a stop in conveying direction C so that the first rail 110 cannot be moved in conveying direction C towards the lateral intermediate beam 140, because its way is blocked by the lateral intermediate beam 140. Thus, the first rail 110 is secured at the opposite end by the lateral end beam 130 (cf. Figure 1), and abuts the lateral intermediate beam 140 at its first hollow end 111.

**Fig. 3B** shows a step 2 in which the raillocker 1 is partially inserted into the hollow end 111 of the first rail 110. The raillocker 1 comprises an elongated body of which a first (right) end is inserted into the hollow end 111 of the first rail 110.

The raillocker 1 comprises a mounting portion 40 arranged at a bottom side of the raillocker 1. In the same method step 2, said mounting portion 40 is inserted and/or arranged from above into a recess of the lateral intermediate beam 140.

During step 2, the raillocker 1 may be engaged into the hollow end 111 of the first rail 110 without any tools, e.g. by hand. Thus, a form-fit between the raillocker 1 and the hollow end 111 of the first rail 110 may be established by a positively-locking in the lateral and/or the vertical directions.

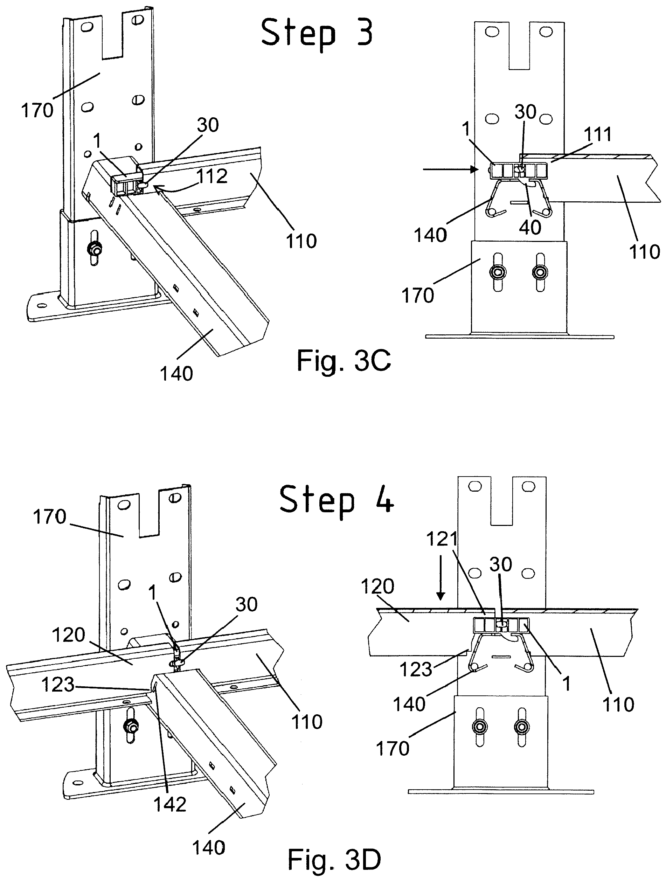

**Fig. 3C** shows a step 3 of the method in which the raillocker 1 is further pushed into the hollow end 111 of the first rail 110. This step may be supported by a tool like a hammer that is hammered onto the opposite, second end of the raillocker 1 as indicated by the arrow on the right hand side of Fig. 3C.

During this step 3, a force-fit between the raillocker 1 and the hollow end 111 of the first rail 110 may be established by a press seat within the hollow end 111.

At the lateral sides, the raillocker 1 comprises a lift-off prevention 30 provided as a lateral protrusion. The lift-off prevention 30 protrudes from the main body of the raillocker 1 in lateral direction. The lift-off prevention 30 is pushed into a recess 112 of the first hollow end 111. The recess 112 of the hollow end 111 is provided in a lateral side and/or wall of the hollow end 111. In the operating position of the raillocker 1 and the first rail 110 shown in Fig. 3C, the lift-off prevention 30 prevents any lifting of the first hollow end 111 of the first rail 110 from the first intermediate beam 140.

During this step 3, the mounting portion 40 (which may be provided as a hook) is pushed into the lateral intermediate beam 140. In the operating position of the raillocker 1 and the lateral intermediate beam 140 shown in Fig. 3C, the mounting portion 40 may be provided as a hook that prevents a lifting of the raillocker 1 from the lateral intermediate beam 140.

**Fig. 3D** shows a step 4 of the method in which the second rail 120 is arranged on the (left) side of the raillocker 1. Therein, the hollow end 121 of the second rail 120 is imposed on the (left) side of the raillocker 1 protruding from the first rail 110. As shown on the right-hand side of Fig. 3D, the second (left) end of the raillocker 1 engages in the (second) hollow end 121 of the second rail 120.

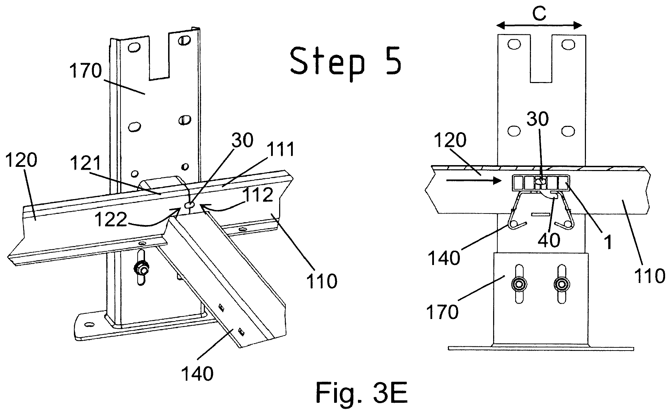

At the second hollow end 121 of the second rail 120, the second rail 120 comprises a protrusion 123 that protrudes from the second hollow end 121 in conveying direction C towards the first rail 110. Not visible in Fig. 3, also the first rail 110 comprises a similar protrusion protruding from the first hollow end 111 in conveying direction C towards the second rail 120. The protrusion 123 of the second hollow end 121 of the second rail 120 is configured to engage in a second opening 142 of the lateral intermediate beam 140 shown on the left-hand side of Fig. 3D. The protrusion 123 is inserted into the second opening 142 to establish a form-fit in a lateral direction between the second rail 120 and the lateral intermediate beam 140.

**Fig. 3E** shows a step 5 of the method in which the second rail 120 is pushed further towards the first rail 110 in conveying direction C, e.g. by hammering. In step 5, a gap between the first rail 110 and 120 is substantially closed so that at least the upper side of the first rail 110 is smoothly continued by the upper side of the second rail 120 and vice versa.

The lift-off prevention 30 of the raillocker 1 engages in both the hollow end 111 of the first rail 110 and the hollow end 121 of the second rail 120. Indeed, the lift-off prevention 30 is arranged at the same time within a first recess 112 of the first hollow end 111 and within a second recess 122 of the second hollow end 121. Thus, both hollow ends 111 and 121 are prevented from being lifted from the lateral intermediate beam 140.

By use of the raillocker 1, the hollow end 111 of the first rail 110 is connected to the hollow end 121 of the second rail 120 without the need of any further fixing means like screws, nails, clamps, or the like. The raillocker 1 enables both a reliable connection between the first rail 110 and the second rail 120 and ensures their correct alignment.

The left first rail 110 may be connected to the left second rail 120 exactly as the right first rail 110 to the right second rail 120. The same method of connecting the first rail 110 to the second rail 120 may be used to connect further successive rails of the conveyor system 100, e.g. the second rails 120 to the third rails 150 and/or the third rails 150 to the fourth rails 160 (cf. Figs. 1 and 2).

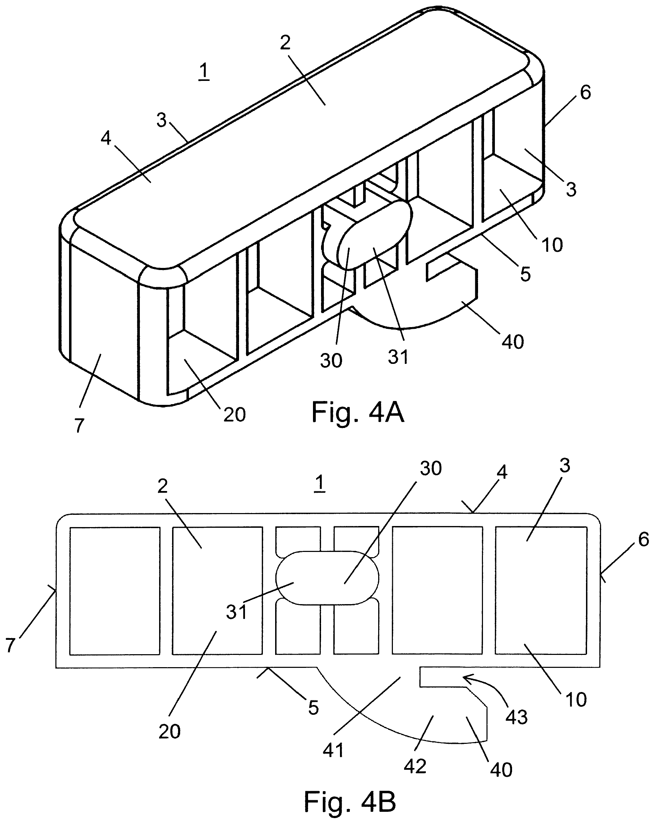

**Fig. 4A** shows a perspective view of the raillocker 1. The raillocker 1 comprises an elongated main body 2 that is substantially shaped like a cuboid comprising round edges. The main body 2 comprises an upper side 4, a lower side 5, a first end side 6, a second end side 7 and two lateral sides 3. Therein, the first end side 6 and the second end side 7 are arranged as ends of the raillocker 1 in conveying direction C (cf. Fig. 1), respectively. In the operating position, the upper side 4, the lower side 5, and the two lateral sides 3 are arranged substantially parallel to the conveying direction C.

Roughly in the middle of each lateral side 3, the raillocker 1 comprises the lift-off prevention 30 in the form of a lateral protrusion 31, respectively. Due to the perspective, only one lateral protrusion 31 is shown in Fig. 4A. A second lateral protrusion 31 is arranged on the lateral side 3 facing away from the viewer of Fig. 4A.

The lateral protrusion 31 protrudes from the lateral side 3 it is arranged on in lateral direction, i.e. in an operating position of the raillocker 1, in a substantially horizontal direction perpendicular to the conveying direction C.

The upper side 4, the first end side 6, and the second end side 7 are provided as substantially flat surfaces of the main body 2. At the lower side 5 of the main body 2, a mounting portion 40 is arranged. The mounting portion 40 extends out of the otherwise substantially flat bottom side 5 of the main body 2.

**Fig. 4B** shows a side view of the raillocker 1 in a lateral direction. The mounting portion 40 protrudes from the bottom side 5 both in a downward direction and in a direction towards the first end side 6. The mounting portion 40 is designed similar to a hook comprising a vertical section 41 adjacent the bottom side 5 of the main body 2 that extends in a substantially downwards direction. A horizontal section 42 of the mounting portion 40 extends substantially in conveying direction C towards the first end section 6. The latter, horizontal section 42 of the mounting portion 40 is configured to be arranged below a rim of the lateral intermediate beam 140. Said rim of the lateral intermediate beam 140 may engage in a gap 43 provided between the bottom side 5 of the main body 2 and the horizontal section 42 of the mounting portion 40.

As shown in Fig. 4B, the lateral protrusion 31 is arranged substantially in the middle of the elongated main body 2 as it extends in conveying direction C. The lateral protrusion 31 is arranged spaced both from the upper side 4 and, in particular, from the lower side 5. As shown in Fig. 4B, the lateral protrusion 31 is arranged slightly closer to the upper side 4 than to the lower side 5 to enable an easy assembly and engaging into the hollow end 111 of the first rail 110 (cf. Fig. 3).

In the side view of Fig. 4B, the lateral protrusion 31 comprises a clearly defined lower edge configured as a stop and spaced from the bottom side 5 of the main body 2. Said lower edge is arranged above a projection of both the first rail 110 and the second rail 120 to impede their lifting, respectively, in the operating position.

The lateral protrusion 31 comprises an elongated shape in conveying direction C so that it may engage in both the first recess 112 of the first hollow end 111 of the first rail 110 and in the second recess 122 of the second hollow end 121 of the second rail 120 (cf. Fig. 3I).

Alternatively, the lateral protrusion 31 may be provided as two or more lateral protrusions of whom at least one is configured to engage into the first recess 112, and another one is configured to engage into the second recess 122.

The lateral protrusion 31 defines a border within the elongated main body 2 of the raillocker 1, namely the border between the first engaging body 10 and the second engaging body 20. The first engaging body 10 extends from the first end side 6 to at least the lateral protrusion 31. The second engaging body 20 extends from the second end side 7 to at least the lateral protrusion 31. At the protrusion 31 and/or at the middle of the main body 2 in conveying direction C, the first engaging body 10 border the second engaging body 20.

The first engaging body 10 is configured to be inserted into the first hollow end 111 of the first rail 110, wherein the outer dimensions of the first engaging body 10 substantially correspond to the inner dimensions of the first hollow end 111 of the first rail 110. The second engaging body 20 is configured to be inserted into the second hollow end 121 of the second rail 120, wherein the outer dimensions of the second engaging body 20 substantially correspond to the inner dimensions of the second hollow end 121 of the second rail 120. Together, the first engaging body 10 and the second engaging body 20 may form and/or provide the whole of the main body 2.

As shown in Figs. 4A and 4B, the raillocker 1 may comprise (e.g. vertically and laterally aligned) ribs to increase its stability. Here, the main body 2 is not provided as a massive, completely filled body, but rather as a mostly hollow body in which the ribs increase its stability. The ribs may reduce the total amount of required material and, thus, the weight of the raillocker 1. This design may also improve the raillocker's resilience against contortions and/or twisting.

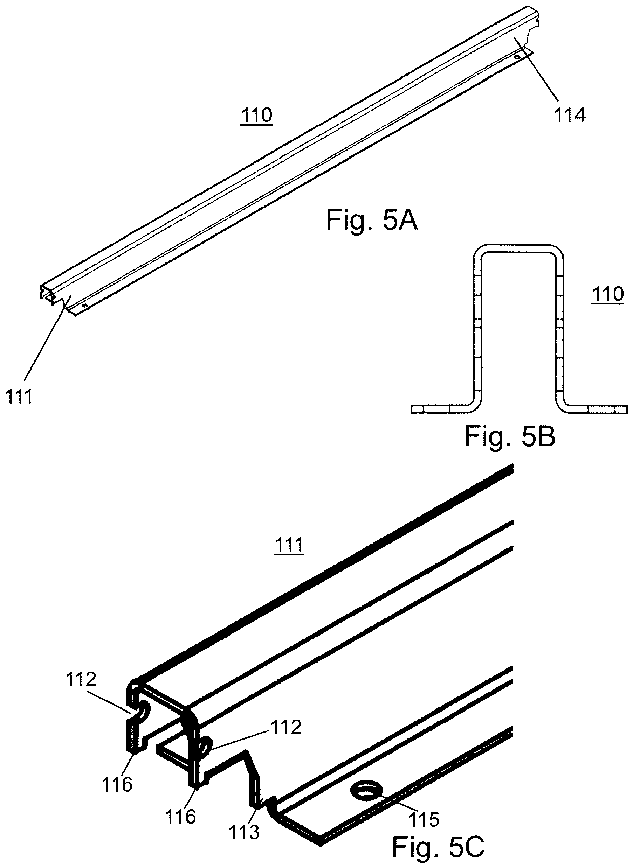

**Fig. 5A** shows a perspective view of the first rail 110. All the other rails of the conveyor system 100, e.g. the second rails 120 the third rails 130, and the fourth rails 160, may be provided and/or designed similarly and/or exactly alike the first rail 110 shown in Fig. 5A.

The first rail 110 comprises the first hollow end 111 at its (left) side and an opposite end 114 at its opposite (right) end. The first hollow end 111 is shaped as the opposite end 114, only facing the opposite direction. The first end 111 and the opposite end 114 are arranged at the respective ends of the first rail 110 in conveying direction C, spaced apart from each other at a distance corresponding to the length of the first rail 110.

In the embodiment shown in Fig. 1, the opposite end 114 is fixed to the lateral end beam 130, and the first hollow end 111 is fixed to the lateral intermediate beam 140. However, both the first hollow end 111 and its opposite end 114 are designed to be connectable to an lateral intermediate beam 140 and, alternatively, also to a lateral end beam 130, depending on which kind of lateral beam is arranged the respective end of the first rail 110.

**Fig. 5B** shows a front view of the first rail 110 in conveying direction C. As shown in Fig. 5B, the rail 110 comprises a hollow inside. Thus, the first rail 110 may be provided as a hollow profile and/or as a hollow beam. Therein, not only the first hollow end 111 is designed hollow in the first rail 110, but its hollow inside may extend throughout the whole length of the first rail 110 from the first hollow end 111 to the opposite end 114.

In the front view shown in Fig. 5B, the first rail 110 is substantially omega-shaped and comprises two edges extending to the two lateral sides (left and right in Fig. 5B), respectively. The first rail 110 further comprises a bent intermediate section which encloses the hollow inside of the first rail 110. At least at the first hollow end 111, the first rail 110 may comprise an upper wall and two lateral walls, i.e. a left wall and a right wall (as shown in Fig. 5B). These walls and/or sides are shaped and dimensioned to snugly fit onto the upper side 4 and the two lateral sides 3 of the main body 2 of the raillocker 1 (cf. Fig. 4a). Therein, the hollow end 111 is dimensioned so that its inner dimensions substantially correspond to the outer dimensions of the first engaging body 10 of the raillocker 1. The lateral walls of the omega-shaped rail 110 may be designed and/or configured to guide a robot along the rail tracks. The upper side of the omega-shaped rail 110 may be designed and/or configured to support drive wheels of a robot, e.g. in kind of a race way.

**Fig. 5C** shows a perspective view of the first hollow end 111 of the first rail 110. At its very end in conveying direction C, the first hollow end 111 comprises two first recesses 112 in the lateral walls of the first rail 110. These first recesses 112 extend in conveying direction C towards the opposite end 114. The first recesses 112 may have an extension into the first rail 110 of only a view millimeters and/or centimeters. The inner dimensions of the first recesses 112 may substantially correspond to the outer dimensions of the lateral protrusions 31 of the raillocker 1 (cf. Fig. 4B). The first recesses 112 are configured to receive the lateral protrusions 31 in the operating position. Since the lateral protrusion 31 extends in lateral direction, at least a lower section of the lateral walls of the first rail 110 are arranged so that they abut the lower edge of the lateral protrusion 31 in the operating position. This blocks a lifting of the first hollow end 111, because the lower rim of the first recess 112 abuts the lower edge of the lateral protrusion 31. Since the raillocker 1 is fixed in vertical direction by its mounting section 40 extending into the lateral intermediate beam 140, the first hollow end 111 is prevented from being lifted in the operating position.

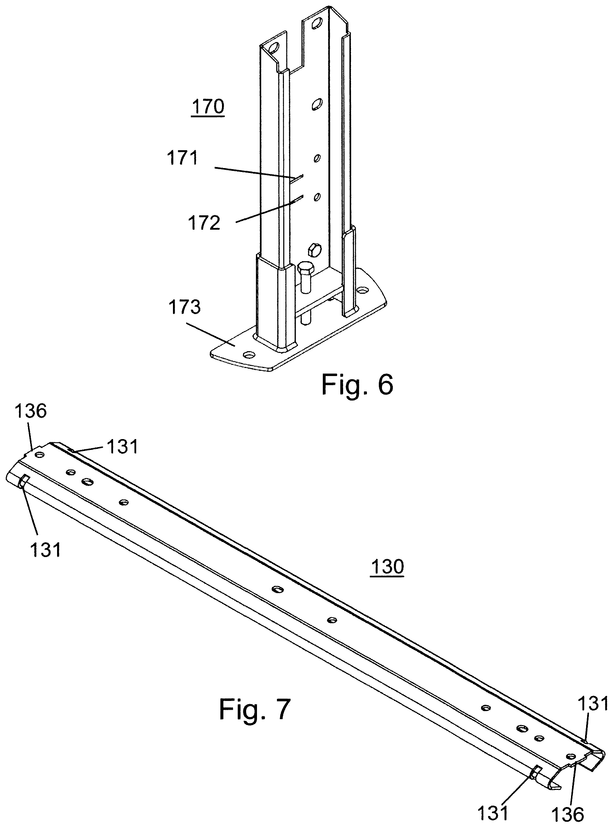

Fig. 5C further shows the first protrusion 113 of the first hollow end 111 that is configured and/or designed to engage in first openings 141 and/or second openings 142 of the lateral intermediate beams 140. Alternatively, they may be arranged in nut recesses 131 of the end beam 130 (cf. Fig. 7).

The first rail 110 may comprise drill holes 115, e.g. in its two laterally extending edges, for fixing the respective end of the first rail 110 to a lateral end beam 130.

Furthermore, the first hollow end 111 may comprise at least one vertical extension 116 for engaging into a recess 143 of the lateral intermediate beam 140 to prevent a shifting of the first rail 110 in conveying direction C in the only partially assembled state as shown in Fig. 3A. The at least one vertical extension 116 may be arranged in the same recess 143 of the lateral intermediate beam 140 in that also the mounting portion 40 of the raillocker 1 extends in the operating position (cf., e.g., Fig. 3B).

**Fig. 6** shows a perspective view of a foot 170 of the conveyor system 100. The foot 170 comprises a stand 173 at its lower end that is designed to stand with a flat face on the floor. The stand 173 may comprise openings and/or bores for screws that may be used to fix the stand 173 and, thus, the foot 170 to the floor. The foot 170 extends from the stand 173 in a substantially vertical, upwards aligned direction. The foot 170 may be designed as part of a lateral frame of the conveyor system 100.

The foot 170 may comprise an upper mounting region 171 and a lower mounting region 172. The mounting regions 171 and/or 172 may be provided as a (e.g. horizontally aligned) slit and/or a recess so that different types of lateral beams may be mounted to the foot 170, e.g. the lateral end beam 130 and the lateral intermediate beam 140. The lateral end beam 130 may be mounted to the lower mounting section 172 and the lateral intermediate beams 140 may be mounted to the upper mounting region 171.

**Fig. 7** shows the lateral end beam 130. The lateral end beam 130 extends in a lateral direction. At its lateral ends, the end beam 130 may comprise lateral protrusions 136 that may be mounted to a foot 170, respectively. The lateral protrusions 136 may be inserted into the lower mounting region 172, respectively. Adjacent its lateral ends, the lateral end beam 130 may comprise nut recesses 131 that may be configured to engage a nut for fixing the lateral end beam 130 to the feet 170. The lateral end beam 130 may further comprise drill holes for receiving screws mounted into the drill hole 115 at the end 111, 114 of the first rail 110. The lateral end beam 130 is configured as a support of the ends 111, 114, 121 of the rails 110, 120, 150, 160 of the conveyor system 100 that are arranged at an end of its conveyor track.

The length of the lateral end beam 130 may substantially correspond to the length of the lateral intermediate beam 140, which may substantially correspond to the width of the conveyor track and/or the distance between the left and right rails.

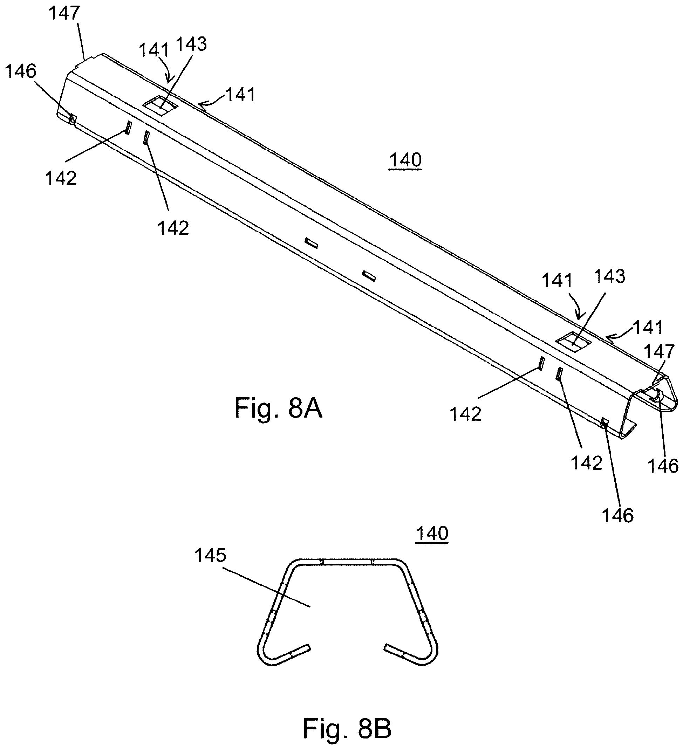

**Fig. 8A** shows a perspective view of the lateral intermediate beam 140. The lateral intermediate beam 140 is provided as a hollow profile. At its upper side, the lateral intermediate beam comprises one recesses 143 adjacent each of its lateral ends for receiving the mounting portions 40 of the raillockers 1 (cf. Fig. 4). At its lateral ends, the lateral intermediate beam 140 may be mounted to one foot 170, respectively.

At its sides facing in the two conveying directions C, the lateral intermediate beam 140 comprises second openings 142 and first openings 141. The second openings 142 are arranged on the side facing the second rail 120. The first openings 141 are arranged in the side facing the first rail 110. The first openings 141 and the second openings 142 are configured to receive the first protrusions 113 and the second protrusions 123 of the first rail 110 and the second rail 120, respectively.

At its lateral ends, the lateral intermediate beam 140 may comprise lateral protrusions 147 that may be mounted to a foot 170, respectively. The lateral protrusions 147 may be inserted into the upper mounting region 171, respectively. Adjacent its lateral ends, the lateral intermediate beam 140 may comprise nut recesses 146 that may be configured to engage a nut for fixing the lateral intermediate beam 140 to the feet 170.

**Fig. 8B** shows a side view of the lateral intermediate beam 140. As shown, the lateral intermediate beam 140 is provided as a hollow profile 145 enclosing an at least partially enclosed spaced in between. Said a partially enclosed spaced may be engaged from above by the mounting portion 40 of the raillocker 1 in the operating position. Furthermore, the design of the hollow profile 145 may provide an increased stability and support for the rails 110, 120, 150, and 160 of the conveyor system 100.

The raillocker 1 enables a connection in which all rails 110, 120, 150, and 160 of the conveyor system 100 are securely positioned and/or assembled in the operating position. For example, when the first rail 110 of the conveyor system 100 shown in Fig. 1 is aligned, it cannot be moved in conveying direction C towards the end beam 130, because its way is blocked at the lateral end beam 130, e.g. by its fixing elements 135.

Furthermore, the first rail 110 cannot be moved in conveying direction C towards the lateral intermediate beam 140, because this direction is blocked by the side of the lateral intermediate beam 140 facing the first rail 110 which the first hollow end 111 abuts.

A movement of the first rail 110 in lateral direction is blocked at both its first hollow end 111 and at its opposite end 114 because its first protrusions 113 (and according protrusions at the opposite end 114) are inserted in the first openings 141 of the lateral intermediate beam 140 and/or the fixing of the first rail 110 to the lateral end beam 130, e.g. by its fixing elements 135.

The first rail's 110 movement in a vertical direction downwards is blocked at the first hollow end 111 by the upper side of the lateral intermediate beam 140. At the lateral end beam 130, this movement is blocked at the opposite end 114 by the upper side of the lateral end beam 130.

Any lifting in an upwards direction of the first rail 110 is prevented at the lateral end beam 130 by the fixing elements 135 (e.g. screws), and, at the lateral intermediate beam 140 by the lift-off prevention 30 in the form of lateral protrusions 31 engaging in the first recesses 112 at the first hollow end 111.

Thus, the described connection and/or assembling method enables a simply assembling of the rails into a completely secured operating position. Indeed, the assembling method may be so simple that even the customer may be enabled to assemble the conveyor system 100 by itself, without the need of specially trained staff. The disclosed method of assembling and/or connecting saves material and work time, because at least at the intermediate connections at the lateral intermediate beams 140, no further fixing elements like screws, bolts, clamps, etc. are required to securely connect the successive rails of the conveyor system 100.

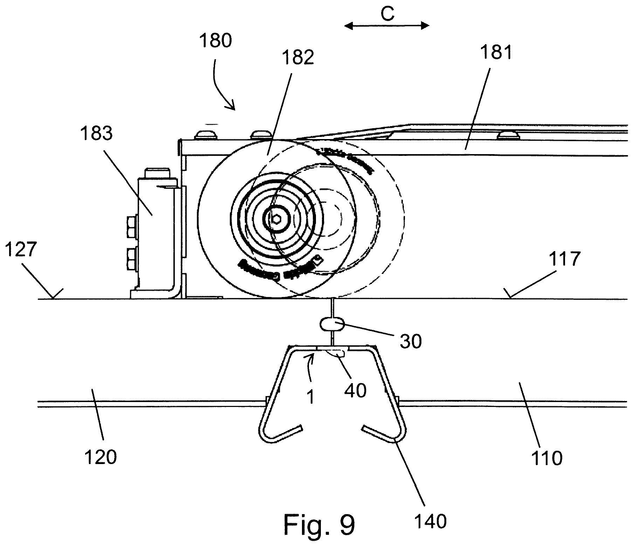

**Fig. 9** shows a side view of a partially shown robot 180 driving along the assembled rails 110 and 120 of the conveyor system 100. The robot 180 may be provided as a robotic vehicle comprising a robot frame 181 on which at least one drive wheel 182 is mounted, preferable at least four drive wheels 182. The axis of rotation of the at least one drive wheel 182 is arranged in a substantially horizonal direction that is aligned substantially perpendicular to the conveying direction C.

The robot 180 is supported by the at least one drive wheel 182 that is driving on the rails 110 and 120 of the conveyor system 100. In particular, the at least one drive wheel 182 is driving on an upper side 117 of the first rail 110 and an upper side 127 of the second rail 120. The rails 110, 120 of the conveyor system 100 are in their operating position wherein they are connected to each other by the raillockers 1. In their operating position, the rails 110, 120 provide a continuous upper rail side consisting of the individual upper sides 117, 127, etc. of the rails 110, 120, etc. of the conveyor system 100.

The robot 180 may further comprise a mounting 183 for at least one guide wheel of the robot 180. In the side view shown in Fig. 9, the guide wheel is arranged behind the second rail 120 and, thus, not shown. The guide wheel may comprise an axis of rotation that is substantially arranged in a vertical direction. The guide wheel is configured to roll on the inner lateral side of the rails 110, 120 of the conveyor system 100. Alternatively or additionally, the robot 180 may comprise at least one guide wheel rolling on the outer lateral side of the rails 110, 120. Preferably, the robot 180 comprises at least two guide wheels rolling on different lateral sides, e.g. on the two inner lateral sides of the right and left rails 110, 120, etc. This improves a stable and secure guiding of the robot 180.

In their operating position, the rails 110, 120 provide at least one continuous lateral (e.g. inner) rail side consisting of the individual lateral sides of the rails 110, 120, etc. of the conveyor system 100. The guide wheel is rolling along said continuous lateral (e.g. inner) rail side. The at least one guide wheel enables a safe guiding of the robot 180 along the rail tracks of the conveyor system 100.

In their connected operating position, the rails 110, 120, etc. of the conveyor system 100 are used for supporting and guiding the robot 180 along the rail tracks of the conveyor system 100. Thus, an aspect relates to the use of the rails 110, 120 connected by the raillocker 1 for supporting and/or guiding the robot 180 along the rail tracks of the conveyor system 100.

On its upper side, the robot 180 may comprise a drive (not shown in the figures) for driving rollers of the conveyor system 100 that convey a load like, e.g., a pallet, along the conveying directions C.

### List of Reference Numerals

- 1: raillocker
- 2: main body
- 3: lateral side
- 4: upper side
- 5: bottom side
- 6: first end side
- 7: second end side
- 10: first engaging body
- 20: second engaging body
- 30: lift-off prevention
- 31: first lateral protrusion
- 32: second lateral protrusion
- 40: mounting portion
- 41: vertical section
- 42: horizontal section
- 43: gap
- 100: conveyor system
- 101: first section
- 102: second section
- 103: third section
- 104: fourth section
- 110: first rail
- 111: first hollow end
- 112: recess of the first hollow end
- 113: protrusion of the first hollow end
- 114: opposite end
- 115: drill hole
- 116: extension
- 117: upper side
- 120: second rail
- 121: second hollow end
- 122: recess of the second hollow end
- 123: protrusion of the second hollow end
- 127: upper side
- 130: lateral end beam
- 131: nut recess
- 135: fixing element
- 136: lateral protrusion
- 140: lateral intermediate beam
- 141: first opening
- 142: second opening
- 143: recess
- 145: hollow profile
- 146: nut recess
- 147: lateral protrusion
- 150: third rail
- 160: fourth rail
- 170: foot
- 171: upper mounting region
- 172: lower mounting region
- 173: stand
- 180: robot
- 181: robot frame
- 182: drive wheel
- 183: mounting
- C: conveying direction

## Claims

1. A raillocker (1) for assembling two successive rails (110, 120) of a conveyor system (100) in an operating position, in which the two rails (110, 120) are aligned in a conveying direction (C) of the conveyor system (100), the raillocker (1) comprising:
- a first engaging body (10) for engaging in a hollow end (111) of a first rail (110) of the two rails (110, 120) in a form-fit;
- a second engaging body (20) for engaging in a hollow end (121) of a second rail (120) of the two rails (110, 120) in a form-fit; and
- a lift-off prevention (30) in the form of a lateral protrusion (31) configured to engage in a recess (112,122) of both the first rail (110) and the second rail (120), respectively, in the operating position in which the lift-off prevention (30) prevents a lifting of both the first rail (110) and the second rail (120).

2. The raillocker (1) of claim 1, wherein the raillocker (1) comprises an elongated main body (2) comprising the first engaging body (10) and the second engaging body (20), and wherein the lateral protrusion (31) of the lift-off prevention (30) protrudes from the main body (2) in a lateral, horizontal direction perpendicular to the conveying direction (C).

3. The raillocker (1) of claim 1 or 2, wherein
- the raillocker (1) comprises an elongated main body (2) comprising the first engaging body (10) and the second engaging body (20);
- the lift-off prevention (30) comprises two lateral protrusions (31) protruding from the main body (2) in opposite directions; and
- each of the two lateral protrusions (31) is configured to engage in a recess (112, 122) of both the first rail (110) and the second rail (120), respectively, in the operating position.

4. The raillocker (1) of any of the preceding claims, further comprising a mounting portion (40) for mounting the raillocker (1) to a lateral intermediate beam (140) of the conveyor system (100).

5. The raillocker (1) of claim 4, wherein the mounting portion (40) is provided as a hook and/or arranged at a bottom side (5) of the raillocker (1).

6. The raillocker (1) of any of the preceding claims, wherein the raillocker (1) is provided as a monobloc.

7. A conveyor system (100) comprising at least one raillocker (1) according to any of the preceding claims, wherein:
- the raillocker (1) is connecting two rails (110, 120) of the conveyor system (100) in an operating position in which the two rails (110, 120) are aligned in a conveying direction (C) of the conveyor system (100),
- the first engaging body (10) of the raillocker (1) engages in a hollow end (111) of a first rail (110) of the two rails (110, 120) in a form-fit;
- the second engaging body (20) of the raillocker (1) engages in a hollow end (121) of a second rail (110) of the two rails (110, 120) in a form-fit; and
- the lift-off prevention (30) in the form of the lateral protrusion (31, 32) engages in a recess (112, 122) of both the first rail (110) and the second rail (120), respectively, in the operating position in which the lift-off prevention (30) prevents a lifting of both the first rail (110) and the second rail (120).

8. The conveyor system (100) of claim 7, further comprising a lateral intermediate beam (140) arranged at a position at which the first rail (110) is connected to the second rail (120) and aligned in a horizontal direction perpendicular to the conveying direction (C), wherein both the first rail (110) and the second rail (120) are supported by the a lateral intermediate beam (140).

9. The conveyor system (100) of claim 8, wherein the lateral intermediate beam (140) comprises at least one opening (141, 142) in that protrusions (114, 124) of both the first rail (110) and the second rail (120) engage.

10. The conveyor system (100) of claim 8 or 9, wherein the raillocker (1) comprises a mounting portion (40) engaging a recess (143) of the lateral intermediate beam (140).

11. The conveyor system (100) of any of claims 8 to 10, wherein
- the hollow end (111) of the first rail (110) abuts the lateral intermediate beam (140) in conveying direction (C) facing the second rail (120); and
- the hollow end (121) of the second rail (120) abuts the lateral intermediate beam (140) in conveying direction (C) facing the first rail (110).

12. The conveyor system (100) of any of claims 7 to 11, further comprising a lateral end beam (130) aligned in a horizontal direction perpendicular to the conveying direction (C) and arranged at an end of the conveyor system (100) in conveying direction (C), wherein the first rail (110) is fixed to the lateral end beam (130) at an end opposite of its hollow end (111) facing the second rail (120).

13. The conveyor system (100) of any of claims 7 to 12, wherein the raillocker (1), the first rail (110), and the second rail (120) is provided as a left raillocker (1), a left first rail (110), and a left second rail (120), respectively, and wherein the conveyor system (100) further comprises a right raillocker (1) according to any of claims 1 to 6, connecting two right rails (110, 120) of the conveyor system (100) in an operating position in which the two right rails (110, 120) are aligned in a conveying direction (C) of the conveyor system (100) parallel to and spaced from the two left rails (110, 120), and wherein:
- the first engaging body (10) of the right raillocker (1) engages in a hollow end (111) of a right first rail (110) of the two right rails (110, 120) in a form-fit;
- the second engaging body (20) of the right raillocker (1) engages in a hollow end (121) of a right second rail (110) of the two right rails (110, 120) in a form-fit; and
- the lift-off prevention (30) in the form of a lateral protrusion (31, 32) engages in a recess (112, 122) of both the right first rail (110) and the right second rail (120), respectively, in the operating position in which the lift-off prevention (30) prevents a lifting of both the right first rail (110) and the right second rail (120).

14. The conveyor system (100) of any of claims 7 to 13, further comprising a robot moving on the at least two rails (110; 120) of the conveyor system (100).

15. Method of assembling two successive rails (110, 120) of a conveyor system (100) in an operating position so that the two rails (110, 120) are aligned in a conveying direction (C) of the conveyor system (100), comprising the steps:
- providing a raillocker (1);
- engaging a first engaging body (10) of the raillocker (1) in a hollow end (111) of a first rail (110) in a form-fit;
- engaging a lift-off prevention (30) of the raillocker (1) in the form of a lateral protrusion (31) in a recess (112) of the first rail (110);
- engaging a second engaging body (20) of the raillocker (1) in a hollow end (121) of a second rail (120) of the two rails (110, 120) in a form-fit; and
- engaging the lift-off prevention (30) of the raillocker (1) in a recess (122) of the second rail (120).

## Amended claims

### Amended claims in accordance with Rule 137(2) EPC.

1. A conveyor system (100) comprising at least one raillocker (1) for assembling and connecting two successive rails (110, 120) of the conveyor system (100) in an operating position, in which the two rails (110, 120) are aligned in a conveying direction (C) of the conveyor system (100), the raillocker (1) comprising:
- a first engaging body (10) engaging in a hollow end (111) of a first rail (110) of the two rails (110, 120) in a form-fit;
- a second engaging body (20) engaging in a hollow end (121) of a second rail (120) of the two rails (110, 120) in a form-fit; and
- a lift-off prevention (30) in the form of a lateral protrusion (31) engaging in a recess (112,122) of both the first rail (110) and the second rail (120), respectively, in the operating position in which the lift-off prevention (30) prevents a lifting of both the first rail (110) and the second rail (120);
wherein the conveyor system (100) further comprises a lateral intermediate beam (140) arranged at a position at which the first rail (110) is connected to the second rail (120) and aligned in a horizontal direction perpendicular to the conveying direction (C), wherein both the first rail (110) and the second rail (120) are supported by the lateral intermediate beam (140).

2. The conveyor system (100) of claim 1, wherein the raillocker (1) comprises an elongated main body (2) comprising the first engaging body (10) and the second engaging body (20), and wherein the lateral protrusion (31) of the lift-off prevention (30) protrudes from the main body (2) in a lateral, horizontal direction perpendicular to the conveying direction (C).

3. The conveyor system (100) of claim 1 or 2, wherein
- the raillocker (1) comprises an elongated main body (2) comprising the first engaging body (10) and the second engaging body (20);
- the lift-off prevention (30) comprises two lateral protrusions (31) protruding from the main body (2) in opposite directions; and
- each of the two lateral protrusions (31) is to engaging in a recess (112, 122) of both the first rail (110) and the second rail (120), respectively, in the operating position.

4. The conveyor system (100) of any of the preceding claims, further comprising a mounting portion (40) for mounting the raillocker (1) to the lateral intermediate beam (140).

5. The conveyor system (100) of claim 4, wherein the mounting portion (40) is provided as a hook and/or arranged at a bottom side (5) of the raillocker (1).

6. The conveyor system (100) of any of the preceding claims, wherein the raillocker (1) is provided as a monobloc.

7. The conveyor system (100) of any of the preceding claims, wherein the lateral intermediate beam (140) comprises at least one opening (141, 142) in that protrusions (114, 124) of both the first rail (110) and the second rail (120) engage.

8. The conveyor system (100) of any of the preceding claims, wherein the raillocker (1) comprises a mounting portion (40) engaging a recess (143) of the lateral intermediate beam (140).

9. The conveyor system (100) of any of the preceding claims, wherein
- the hollow end (111) of the first rail (110) abuts the lateral intermediate beam (140) in conveying direction (C) facing the second rail (120); and
- the hollow end (121) of the second rail (120) abuts the lateral intermediate beam (140) in conveying direction (C) facing the first rail (110).

10. The conveyor system (100) of any of the preceding claims, further comprising a lateral end beam (130) aligned in a horizontal direction perpendicular to the conveying direction (C) and arranged at an end of the conveyor system (100) in conveying direction (C), wherein the first rail (110) is fixed to the lateral end beam (130) at an end opposite of its hollow end (111) facing the second rail (120).

11. The conveyor system (100) of any of the preceding claims, wherein the raillocker (1), the first rail (110), and the second rail (120) is provided as a left raillocker (1), a left first rail (110), and a left second rail (120), respectively, and wherein the conveyor system (100) further comprises a right raillocker (1) connecting two right rails (110, 120) of the conveyor system (100) in an operating position in which the two right rails (110, 120) are aligned in a conveying direction (C) of the conveyor system (100) parallel to and spaced from the two left rails (110, 120), and wherein:
- a first engaging body (10) of the right raillocker (1) engages in a hollow end (111) of a right first rail (110) of the two right rails (110, 120) in a form-fit;
- a second engaging body (20) of the right raillocker (1) engages in a hollow end (121) of a right second rail (110) of the two right rails (110, 120) in a form-fit; and
- a lift-off prevention (30) in the form of a lateral protrusion (31, 32) engages in a recess (112, 122) of both the right first rail (110) and the right second rail (120), respectively, in the operating position in which the lift-off prevention (30) prevents a lifting of both the right first rail (110) and the right second rail (120).

12. The conveyor system (100) of any of the preceding claims, further comprising a robot moving on the at least two rails (110; 120) of the conveyor system (100).

13. Method of assembling two successive rails (110, 120) of a conveyor system (100) in an operating position so that the two rails (110, 120) are aligned in a conveying direction (C) of the conveyor system (100), comprising the steps:
- providing a raillocker (1);
- engaging a first engaging body (10) of the raillocker (1) in a hollow end (111) of a first rail (110) in a form-fit;
- engaging a lift-off prevention (30) of the raillocker (1) in the form of a lateral protrusion (31) in a recess (112) of the first rail (110);
- engaging a second engaging body (20) of the raillocker (1) in a hollow end (121) of a second rail (120) of the two rails (110, 120) in a form-fit;
- engaging the lift-off prevention (30) of the raillocker (1) in a recess (122) of the second rail (120); and
- arranging a lateral intermediate beam (140) at a position at which the first rail (110) is connected to the second rail (120) and aligned in a horizontal direction perpendicular to the conveying direction (C), so that both the first rail (110) and the second rail (120) are supported by the lateral intermediate beam (140).
